# EUROPEAN PATENT SPECIFICATION

(11) **EP 0 947 302 B1**
(45) Date of publication and mention of the grant of the patent: **18.09.2002**
(21) Application number: 98201050.6
(22) Date of filing: 02.04.1998
(51) Int. Cl.: B29C 31/00, B29C 65/20, E06B 3/96, B29C 65/00

(54) **Method and apparatus for thermally joining members to form a frame**
Verfahren und Vorrichtung zum thermischen Verbinden von Elementen zum Formen eines Rahmens
Procédé et dispositif pour relier thermiquement des éléments pour former un cadre

(43) Date of publication of application: 06.10.1999
(73) Proprietor: Schlegel BVBA, 8470 Gistel (BE)
(72) Inventor: Maene, Jan, 8480 Ichtegem (BE); Rignault, Claude, 71250 Cluny (FR)
(74) Representative: Bird, William Edward

(56) References cited:
- EP-A- 0 428 077
- EP-A- 0 531 681
- WO-A-88/03863
- CH-A- 622 580
- DE-A- 3 739 656
- DE-C- 3 405 384
- DE-C- 19 545 480

## Description

The present invention relates to a method of joining at least two members particularly by thermal welding or thermally activated adhesive as well as to fixtures for facilitating the method and an apparatus for carrying out the method. The present invention also relates to a frame having at least two elongate members including at least a first thermally formed joint between said elongate members and at least a second thermally formed joint between flexible resilient seals longitudinally located in said elongate members. The present invention is particularly useful in the production of PVC (polyvinylchloride) door and window frames and windows all of which may include flexible resilient seals.

### TECHNICAL BACKGROUND

It is known from CH-A-6 22 580 or from DE-A-3739656 to form window or door frames by thermally welding together pre-cut plastic sections. The section lengths are shortened in the welding process by 2 to 3 mm with the formation of a welding bead all around the join and particularly in the grooves designed to receive a flexible gasket or seal. This bead has to be removed which is particularly troublesome and time consuming. In addition, post-welding introduction of flexible seals or gaskets by hand around the frame is also time-consuming.

It is known to introduce the gaskets into their respective grooves before the manufacture of the window frames. It is also known to use thermoplastic seals. This may be done by poltrusion, co-extrusion, or tandem extrusion of the frame section and seal. One example of such a method is described in WO 88/03863. Alternatively, some form of in-line mechanical placement method of the sealing strip may be used. The resulting long lengths of plastic section with in-place seals are cut to the correct length and angle before welding. During cutting of the sections, e.g. at 45°, the seal is also cut and during welding the seal may also be welded at the same time. This procedure results in the general problem of leaks at the joint positions. Particularly troublesome is the increase in stiffness (loss of resilience) of the seal material local to the weld of the seal material. This can be sufficient to introduce a leak path after completion of the window and frame. Due to the small size of the seal, the flexible nature of the seal material and the requirement for a smooth outer surface to make a good seal, correction of this stiffer portion is difficult. This problem is particularly acute when the seals include substantial quantities of foam material, e.g. sealing materials as described in EP-A-142 314. Glazing seals may be stiffened to such an extent that they cause rupture of the glass when it is inserted.

It is known from EP-A-428 077 to mill out spaces at locations in the plastic sections before welding which will lie underneath the later seal joints, i.e. the seats of the sealing materials are partly ground away at the end regions. This procedure allows the beads generated by welding of the sections and the seal to be accommodated in these spaces. The known method attempts to compensate for the increase in stiffness at the seal joint by allowing the seal after jointing to move into the ground out space, i.e. the seal joint is cantilevered from positions either side of the joint. However, removing material at the ends of the sections weakens the frame at its most critical and weakest point which is also the point where bending forces are concentrated, namely the joint between the sections. In addition, this procedure adds an extra operation which is costly. Finally, the compensation for the increase in stiffness is difficult to regulate.

It is an object of the present invention to provide a method and an apparatus for joining members by a thermal process whereby increase in stiffness of the flexible seal joints is avoided or reduced, in particular the effect of a bead on flexible material such as a seal is avoided or reduced.

It is a further object of the present invention to provide a frame with thermally joined sections which includes thermally joined seals, with which the possibility of leaks at the joints is reduced.

### SUMMARY OF THE INVENTION

The present invention includes a method of making a joint between first and second rigid members according to claim 1.

The present invention also includes an apparatus for making a joint between first and second rigid members according to claim 6.

The present invention also includes a frame produced by the method of claim 1 and according to claim 11.

In accordance with the present invention the milling procedure of EP-A-428 077 is unnecessary provided the shield follows the outer surface of the seal material during the whole of the translation motion required to form the joints. The seal material preferably comprises substantially a thermoplastic resilient foam, particularly a thermoplastic open cell resilient foam.

The dependent claims individually define further embodiments of the present invention. The present invention, its embodiments and advantages will now be described with reference to the following drawings.

### BRIEF DESCRIPTION OF THE DRAWINGS

Fig. 1 is a schematic representation of a window frame and sash.
Fig. 2 is a schematic cross-section of a window or sash including extruded profiles.
Fig. 3 is a schematic representation of a welded comer of the window frame or sash of Fig. 2.
Fig. 4 is a schematic representation of profiles prepared ready for welding.
Fig. 5 is a schematic representation of fixtures in accordance with an embodiment of the present invention.
Fig. 6 is an exploded view of the fixture of Fig. 5.
Figs. 7 to 10 are schematic representations which show the method of welding in accordance with one embodiment of the present invention.
Fig. 11 is a cross-sectional representation of a preferred sealing strip in accordance with the present invention.
Figs. 12 a to c are schematic representations of a bead control insert in accordance with one embodiment of the present invention.
Figs. 13 a and b are schematic representations of a bead control element arranged in the fixture of Fig. 5 and a detail thereof respectively.

### DESCRIPTION OF THE ILLUSTRATIVE EMBODIMENTS

The present invention will be described with respect to certain specific embodiments and drawings but the invention is not limited thereto but only by the claims. The present invention will also mainly be described with reference to windows and window frames but the invention is not limited thereto but only by the claims. For instance it may be applied to door frames or doors or lids of boxes, chests or cabinets.

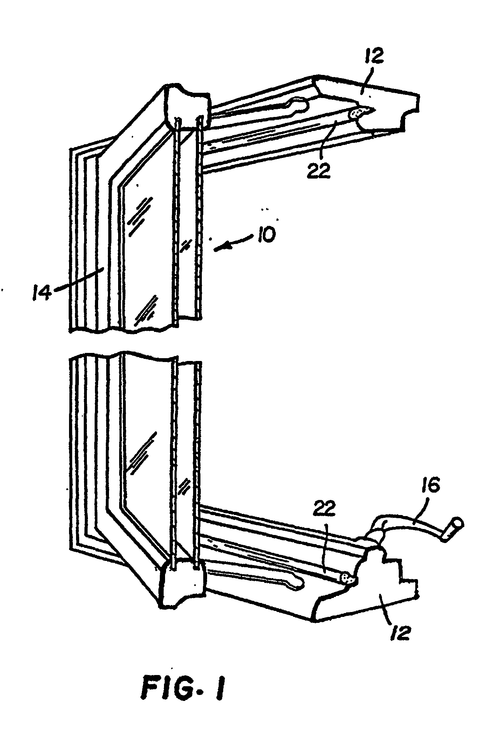

Fig. 1 is a general view of a window 10 hinged to a window frame 12. Window 10 may include a sash 14 in which panes of glass are fixed. A seal strip 22 may be placed on the window frame 12 or on the sash 14 so that the sash 14 is sealed against the window frame 12 when the window 10 is closed. For good sealing ability the seal strips 22 should have a sealing displacement of several millimetres, that is the seal should be able to deflect either through compression of the seal material or movement of the seal in a controlled manner in order to be able to absorb any manufacturing tolerances or surface defects, or movements due to temperature changes.

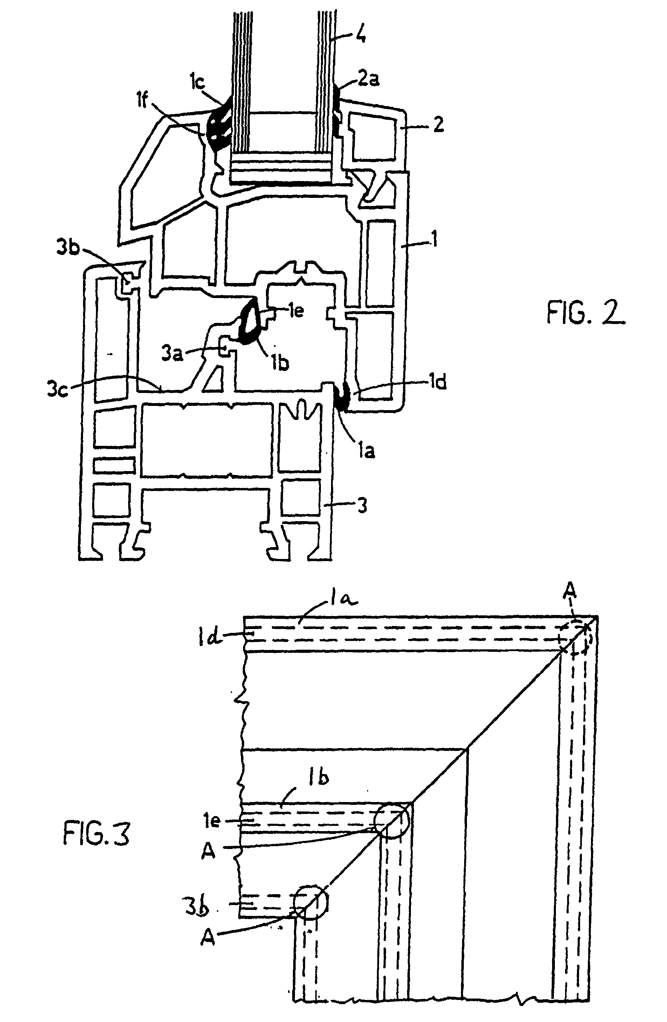

Fig. 2 shows a schematic representation of a window frame and sash as manufactured from extruded plastic materials. The sash 1 is manufactured by extrusion and includes open spaces bounded by internal walls and partitions to reduce the weight while maintaining high rigidity. Sash 1 includes glazing seals 2a and 1c for sealing to glass or plastic panes 4. The panes 4 are held in place by a wedge 2. The window frame 3 is constructed similarly. Between the sash 1 and the frame 3, one or more seals 1a and 1b may be provided. As shown these seals are fixed to the sash I and seal against the window frame 3 but they may also be fixed to the window frame 3 and seal against the sash 1. Further, the seals are shown as co-extruded with the sash 1. In case of replacement of the seals, seal seats 3a, 3b are provided into which seals may be placed by hand. Alternatively, the seals may be pre-placed in seats 3a and 3b.

As shown in Fig. 3 schematically, the corner of a window frame 3 or of a sash 1 (the sash is shown here) is formed by joining two profiled sections at and angle, typically 45°. This may be done, for instance, using equipment supplied by Actual Maschinenbau AG, Ansfelden/Haid Austria, e.g. the A-100-S Profile welding machine. The profiles are cut to length and angle and then placed on the welding machine and secured by specially shaped jigs. A hot plate or "mirror" is raised and the end surfaces of the cut profiles are heated to an appropriate temperature, i.e. to bring the thermoplastic materials used for the profiles and seals into a plastic state. The hot plate is then removed and the profiles pushed together thus forming a weld with an external bead around the join. The joints of the sealing material (shown as A in Fig. 3) generally become hard by this process and loose their sealing ability, i.e. have a significantly reduced sealing displacement.

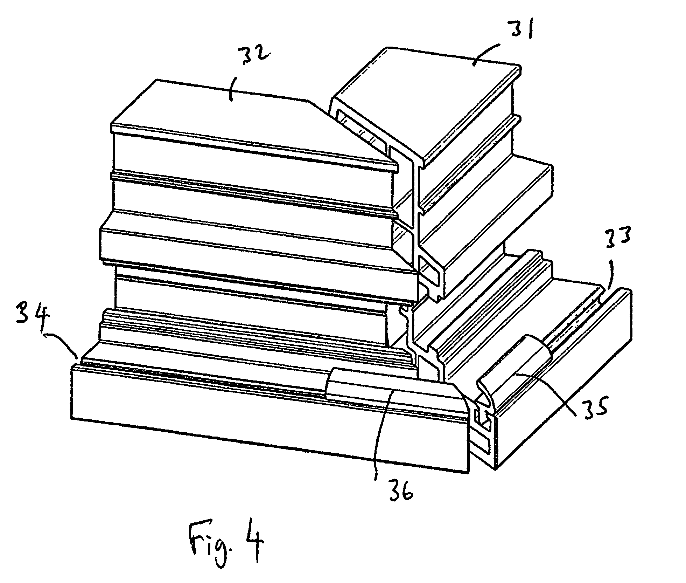

Fig. 4 is a schematic representation of two rigid profiles 31, 32 of the kind used for making window frames or sashes and ready for joining, e.g. they may be made of rigid PVC. Each profile 31, 32 is provided with a seal seat 33, 34 respectively. Into each of these seats 33, 34 is pre-placed or formed a sealing strip 35, 36 of flexible thermoplastic material (only a short section is shown, but it should be understood that the seals are as long as the profiles). Preferably, the sealing strip 35, 36 includes a substantial quantity of foam, e.g. thermoplastic elastomer or rubber foam, polyurethane foam or similar. The foam is preferably open cell but the present invention is not limited thereto. With open cell foams it is preferred if the foam is sealed on the outside by a flexible outer plastic coating as generally described in EP-A-0 142 314.

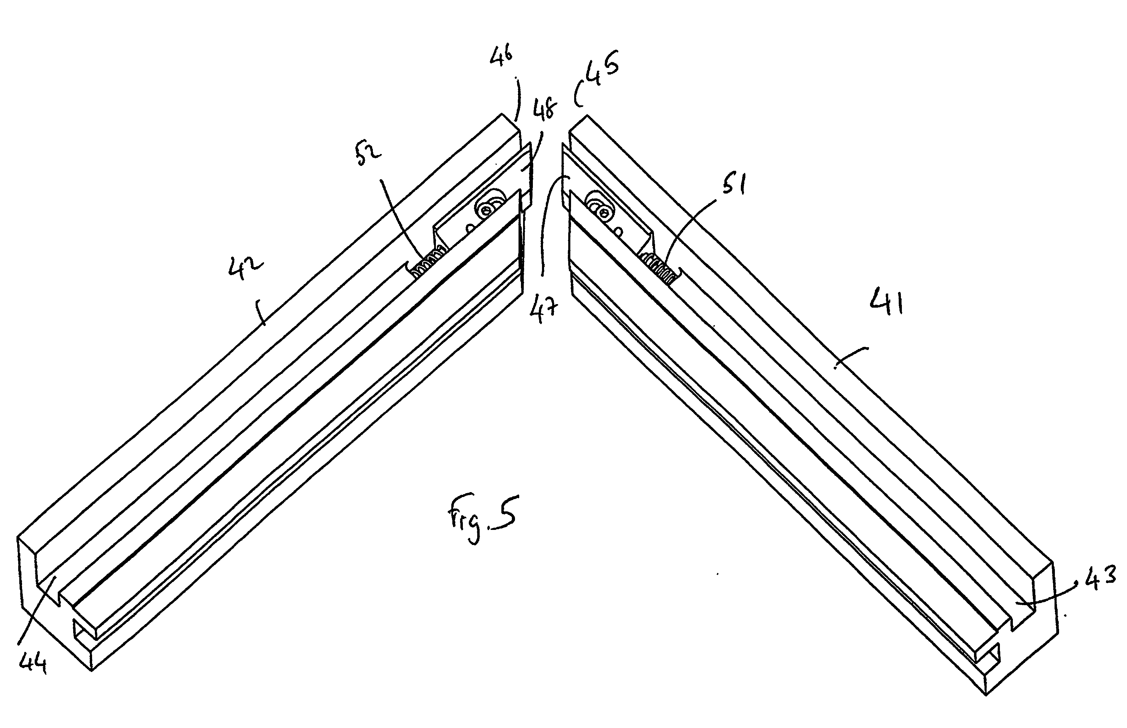

In accordance with the present invention, the cut and prepared rigid thermoplastic profiles 31, 32 are placed faced down onto two special jigs 41, 42 shown schematically in Fig. 5. These jigs 41, 42 may have an outer form which mates with the outer form of the profiles 31, 32 and are preferably made from heat-resistant material such as metal, e.g. steel. Each of the jigs 41, 42 has a longitudinal groove, 43, 44 respectively, into which one of the sealing strips 35, 36 may fit. The ends 45, 46 of the jigs 41, 42 are preferably shaped at the same angle as the cut profiles, e.g. 45°. Located at the ends 45, 46 are two covers 47, 48 which are preferably close fitting onto the outer form of the sealing strips 35, 36. These covers 47, 48 extend beyond the ends 45, 46 of the jigs 41, 42 and are preferably made from a heat-resistant material such as metal, e.g. steel. In accordance with one embodiment of the present invention, the covers 47, 48 are preferably moveable in a direction parallel to the elongate sealing strips 35, 36, in particular, the covers 47, 48 may be sprung loaded so that as the two jigs 41, 42 approach each other during the welding process, the covers 47, 48 touch each other and are forced back against the springs 51, 52.

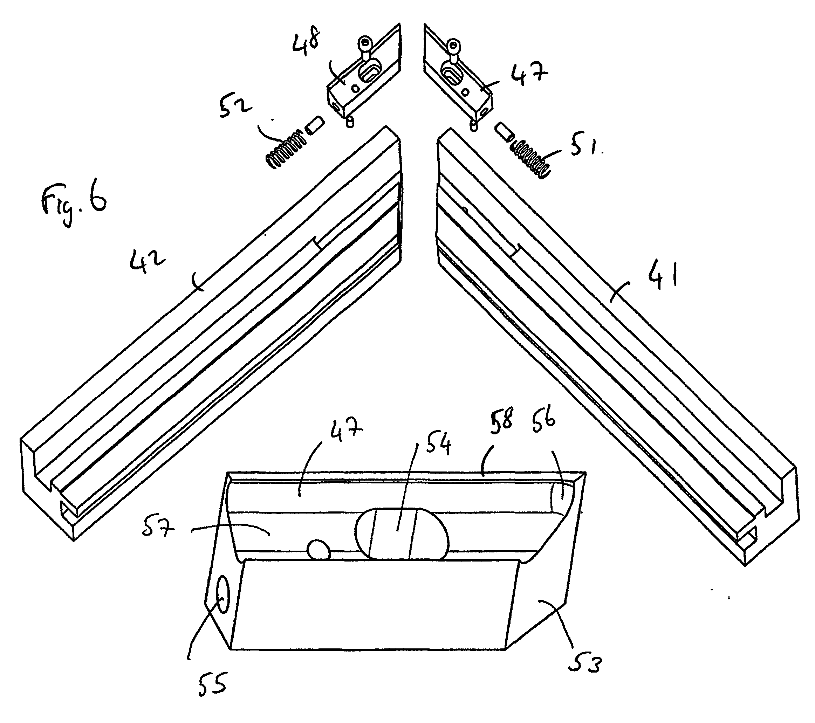

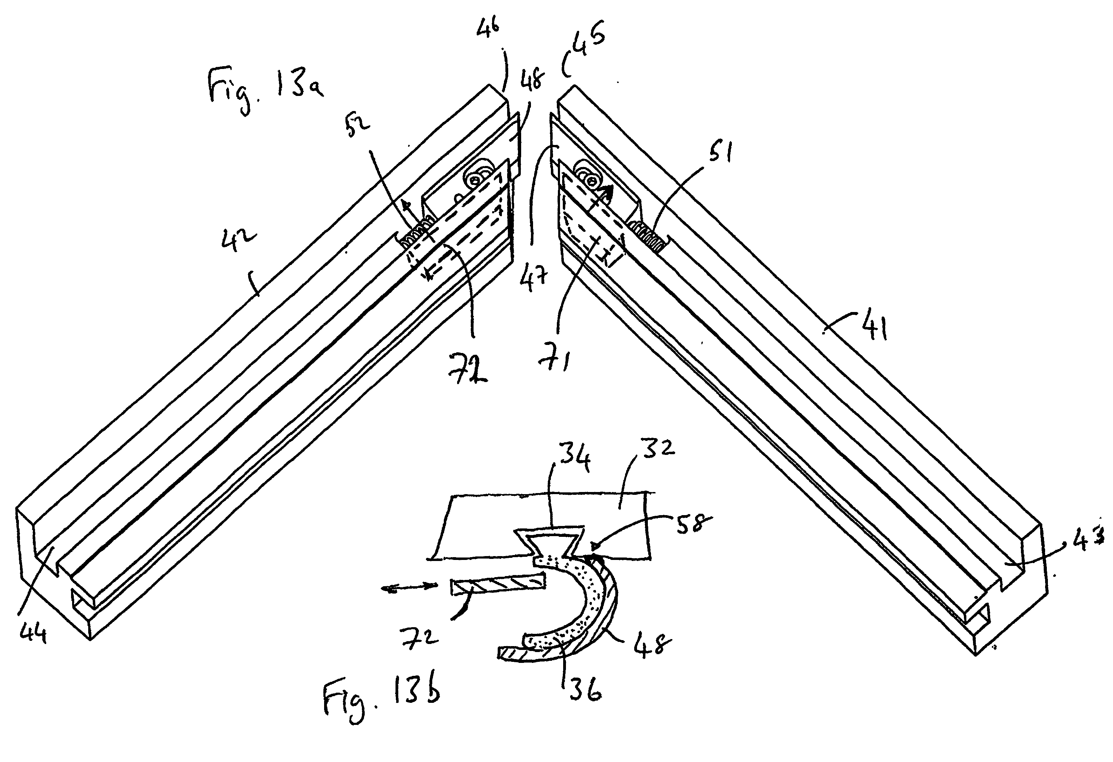

The inner form of a cover 47, 48 in accordance with one embodiment of the present invention is shown schematically in Fig. 6 (only 47 is shown, cover 48 is a mirror image of 47). The cover 47 includes an inner shaped surface 57 which is preferably close fitting to the outer form of sealing strips 35, 36. In particular the form of the covers 47, 48 should preferably be such that the form 57 encompasses the seal strip 35, 36 right down to the surface of the rigid profile on either side of the seal strip 35, 36. For this purpose, the form 57 may include a flat 58 which rests on, and slides over the portion of the profile 31, 32 on either side of the strip 35, 36. The operation flat 58 can best be seen in Fig. 13b. The present invention also includes a flat on the opposite edge of the cover 47, 48, this flat running an the surface of the profile 32, 33 on the opposite side of the seal strip 35, 36 from flat 58. Summarising the above, the present invention includes covers 47, 48 for the flexible sealing strips 35, 36 which control the bead growth on the flexible seals. The present invention also includes bead control elements (which may be covers 47, 48) for bead control of the rigid material on either side of the sealing strips 35, 36.

Cover 47 may also have a bore 55 for receiving spring 52 and an opening 54 with which the cover 47 may be fixed in sliding moveable contact with jig 42. The end face 53 of the cover 47 which is remote from the jig 42 is preferably shaped at half the angle of the frame corner, e.g. 45°. At this front end the surface 57 is preferably provided with a substantially cylindrical or spherical surface 56 which has a form which tends to crimp the end of the sealing strip towards the seal seat.

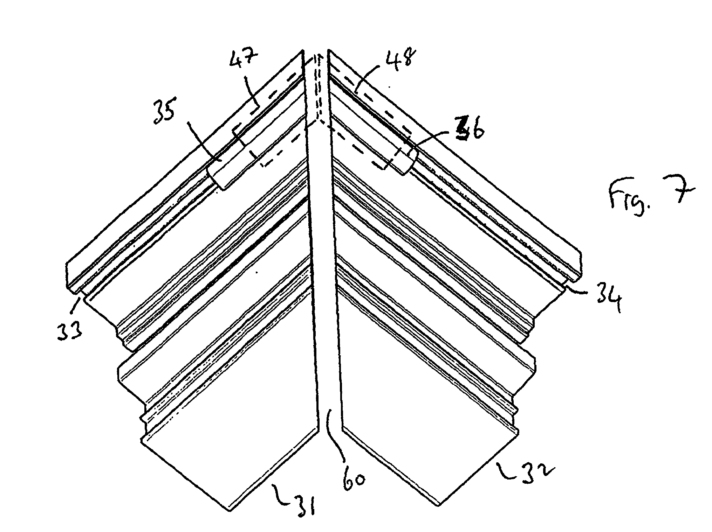

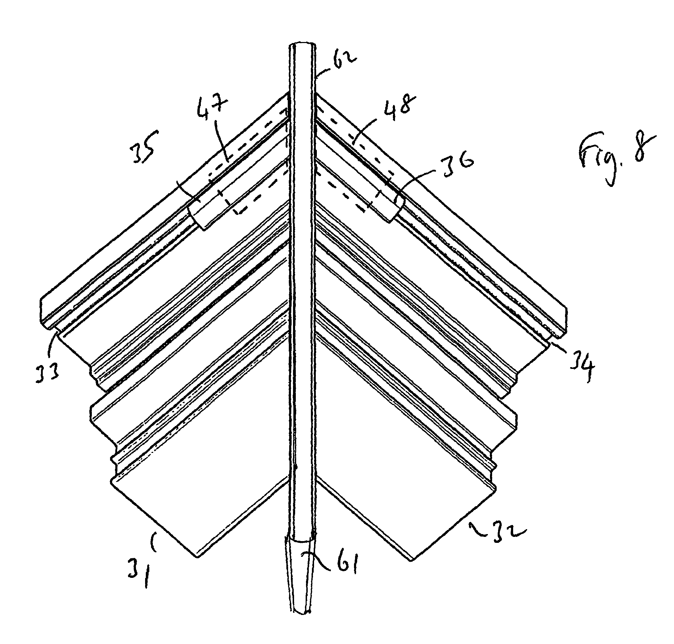

The welding procedure in accordance with an embodiment of the present invention will be described with reference to Figs. 7 to 10. The cut ends of the profiles 31, 32 are placed face down on the jigs 41, 42 so that the cut ends of the profiles 31, 32 extend beyond the ends 45, 46 of jigs 41, 42 at least by a few millimetres and a gap 60 is formed between the cut ends of the profiles 31, 32. The sealing strips 35, 36 are substantially coterminous with the cut profiles 31, 32. No milling of the profiles is required. As shown in Fig. 7 the covers 47, 48 extend beyond the cut ends of the profiles 41, 42, e.g. they are in touching contact and they cover the ends of the sealing strips 35, 36 in close contact. A pre-heated hot plate 61 is now introduced between the cut profiles 31, 32 as shown schematically in Fig. 8. The hot plate 61 may include an outer non-stick covering 62. The jigs 41, 42 may be translated along their length to bring the cut ends of the profiles 31, 32 into contact with the surface of the hot plate 61. The covers 47, 48 move back against the springs 51, 52. The ends of the covers 47, 48, the ends of the sealing strips 35, 36 and the cut ends of the profiles 31, 32 are all heated by the hot plate 61. The hot plate 61 is left in this position until the surfaces of the thermoplastic materials of the profiles 31, 32 and the sealing strips 35, 36 have reached the required temperature for welding.

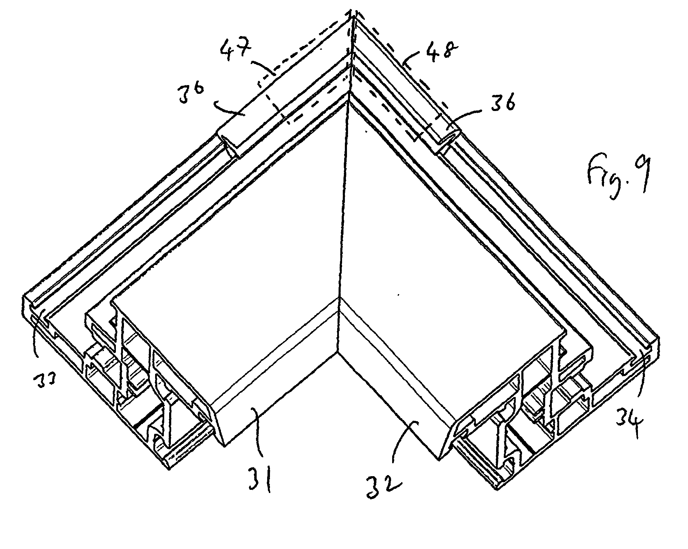

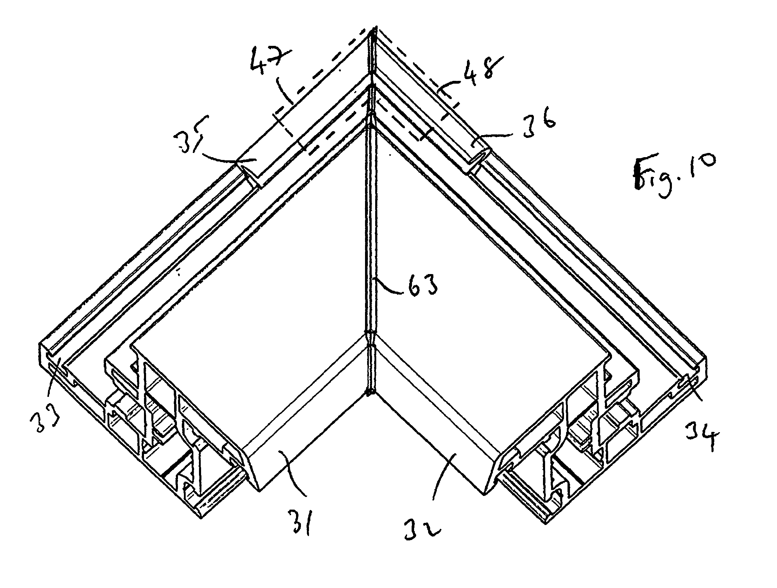

The hot plate 61 is now removed and at least one of the jigs 41, 42 is translated along its (their) length taking with it the profile(s) so that the ends of the profiles come in contact as shown in Fig. 9. Covers 47, 48 move back against the springs 51, 52 until they are approximately coterminous with the sealing strips 35, 36. The form 56 of the covers 47, 48 tends to compress the sealing strips 35, 36 at their ends in a direction towards the seal seats 33, 34 (i.e. upwards), thus flattening the strips 35, 36 slightly. At least one of the jigs 41, 42 is now translated along its length so as to squash the softened ends of the profiles 31, 32 against each other and to form a weld. At the same time a bead of molten material from the rigid profiles 31, 32 rises up at the join position as shown schematically in Fig. 10 and solidifies. During this motion which is usually only a few mm, the covers 47, 48 move back against the springs 51, 52 thus always maintaining a close fitting relationship to the outer surface of sealing strips 35, 36. The close fitting covers 47, 48 also influence the formation of the bead material of the flexible sealing strips 35, 36 especially on the outer surface thereof

Once all materials have solidified, the completed window frame is removed from the jigs 41, 42. It has been found that with the above described method, at least 30% of the original sealing displacement of the sealing strips 35, 36 can be maintained at the sealing strip joint and usually 50% or more can be achieved which is a significant improvement. The sealing displacement may be measured by locating a sealing strip in a suitable sealing seat and distributing a reasonable window closing load of say 18.7 N over a distance of 30 mm of the sealing strip. The displacement of the load before the load comes to rest once the seal is completely compressed is measured. Then jointed pieces of the sealing strip in seats in jointed profiles welded in accordance with the present invention are measured with the joint placed at the centre of the 30 mm wide 18.7 N load. The new displacement is measured and compared with the original result.

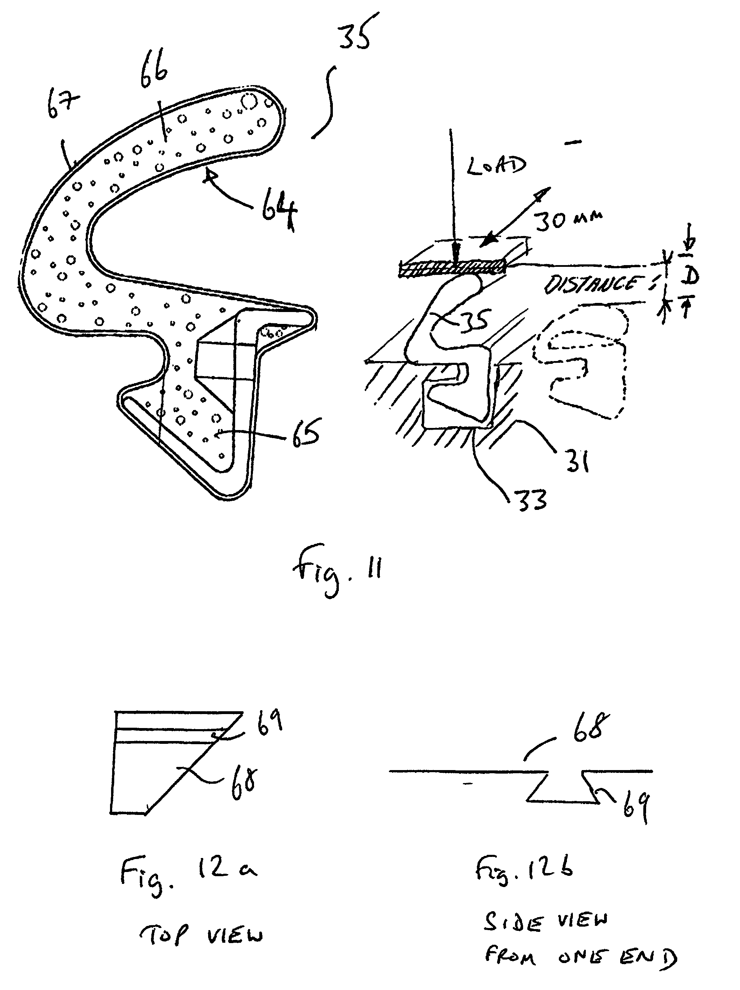

In accordance with the present invention a "C" shaped sealing strip 35 is particularly preferred. A "C" shaped sealing strip is shown schematically in cross-section in Fig. 11. The strip 35 (or 36) includes a curved sealing element and some kind of seal foot 65. The curved seal element 64 has a large sealing displacement "D" while using a minimum of material. Preferably the sealing element 64 is made of foam material 66, typically polyurethane foam, and preferably open cell, with an outer sealing skin 67 of a suitable plastic material. Such seals are supplied by Schlegel BVBA, Gistel, Belgium under the trade name Q-Lon, e.g. type 9107.

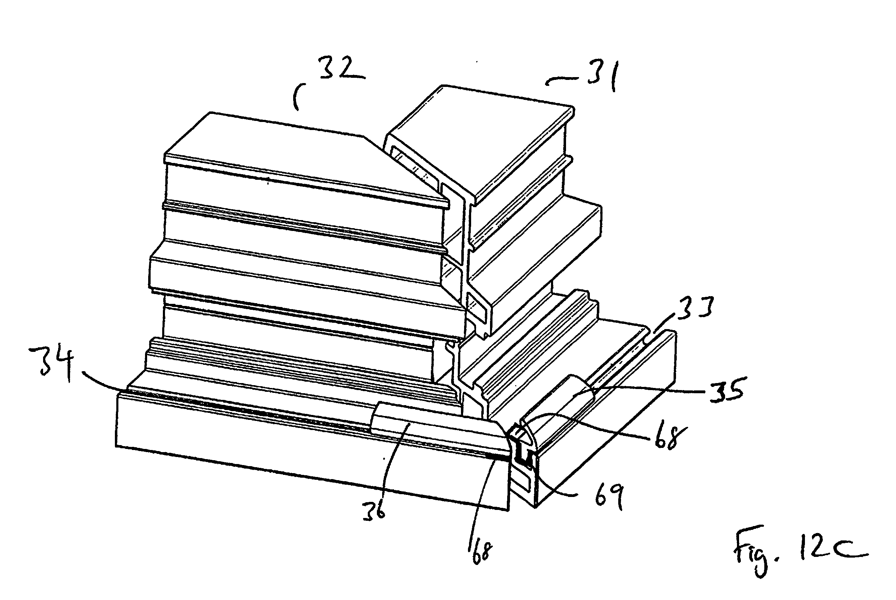

Further modifications to the above mentioned technique are included within the scope of the present invention. For instance in order to control bead size of the rigid profile material beneath and/or on either side of the sealing strip 35, 36, a heat resistant bead control element 68 may be introduced under beneath the seal strip 35, 36 in the seal seat 33, 34. The bead control element 68 may include a shaped portion 69 for location in the seal seat 33, 34 as shown schematically in Figs. 12 a and b. This element 68 may be made of thin steel sheet metal, e.g. stainless steel, and remains in the joint after welding. The bead control element 68 is introduced into the seal seat 33, 34 just before jointing as shown schematically in Fig. 12 c.

The introduction of the bead control element 68 requires an extra manufacturing step. In accordance with another embodiment of the present invention a retractable bead control shield 71, 72 may be included in jigs 41, 42 as shown schematically in Fig. 13a. The retractable shield 71, 72 is located within the body of the jig 41, 42 and can be moved in a direction perpendicular to the direction of movement of the covers 47, 48 so as to bring the shield 71, 72 into the centre of the "C" of the sealing strip 35, 36 as shown schematically in Fig. 13b and also retracted. The purpose of the bead control shield 71, 72 is to control the height of the bead of rigid thermoplastic material which wells up close to the seal seat 33, 34 on the opposite side of the seal strip 33, 34 from the flat 58 of cover 47, 48. This bead can reduce the sealing displacement "D" of the sealing strips 35, 36. Although the bead control shields 71, 72 have been shown as being located in the body of the jigs 41, 42 the present invention contemplates that the control shields 71, 72 may be separate items which are introduced just before welding and removed afterwards by means external to jigs 41, 42.

While the invention has been shown and described with reference to preferred embodiments, it will be understood by those skilled in the art that various changes or modifications in form and detail may be made without departing from the scope of the attached claims. For instance, although the thermoplastic welding procedure described above is preferred in accordance with the present invention, thermosetting materials could be used for the profiles and/or the sealing strips. Instead of using thermoplastic welding, a hot melt adhesive sheet can be introduced into the gap 60 shown in Fig. 7 after the exposed surfaces of the profiles have been heated. As the profiles are forced together, the hot melt adhesive sheet is trapped between them and melts forming the joint. Excess hot melt adhesive will extrude and form a bead in a similar manner to the thermoplastic materials during the thermoplastic welding mentioned above. The covers 47, 48 may cut through the sheet of hot melt adhesive and can control the bead formation in the same way as described above. The covers 47, 48 in accordance with any of the embodiments of the present invention may be coated with a non-stick surface.

## Claims

1. A method of making a joint between first and second rigid members, said first member having at least a first elongate flexible sealing material and said second member having at least a second corresponding elongate sealing material, comprising the steps of:
1) providing said first and second members each having an exposed surface, the exposed surface of said first member including a section through said first sealing material and the exposed surface of said second member including a section through said second sealing material without removing a substantial part of either the first or second members in the region of the joint;
2) locating each member so that the exposed surface of the first member faces and is separated from the exposed surface of said second member;
3) raising the temperature of thermoplastic material which is to form the joint between the members so that the thermoplastic material enters its plastic phase;
4) translating at least one of the first and second members so that the exposed surfaces are brought into contact and the thermoplastic material forms the joint between said first and second members and the joint between said first and second sealing materials; and
5) during said translating step: providing bead control for at least the outer surface of said first and second sealing materials.

2. A method according to claim 1, wherein step 5) includes:
controlling bead formation of the rigid first and second member on at least one side of the first and second sealing materials adjacent to the joint position.

3. A method according to claim 1 or 2 wherein step 5) includes:
forming a substantially close fitting temperature stable shield around the outer surface of said first and second sealing materials at and adjacent to the surfaces to be jointed; and
maintaining said shield in close fitting arrangement with said first and second sealing materials at, and adjacent to the surfaces being jointed throughout the translating step.

4. A method according to any previous claim, further comprising the step of crimping the ends of the first and second sealing materials at the joint thereof

5. A method according to claim 4 as dependent upon claim 3, wherein said shield has a cylindrical or spherical surface on an end surface of the shield remote from said first or second member and said crimping step is performed by said cylindrical or spherical surface.

6. An apparatus for making a joint between first and second rigid members, said first member having at least a first elongate flexible sealing material and said second member having at least a corresponding second elongate flexible sealing material, each member also having an exposed surface which sections said first and second sealing materials, comprising:
a jig for locating said first and second members so that the exposed surfaces of said first and second members are located facing, and separated from, each other thus forming a gap;
said jig including a first bead control element for controlling the bead on the outer surface of the first and second sealing materials and a second bead control element for controlling the bead of the rigid first and second members on at least one side of the first and second sealing material adjacent the joint position;
a heater for heating up thermoplastic material for forming a first joint between said first and second members and a second joint between said first and second sealing materials; and
a translation device for translating at least one of said first and second members so that the exposed surfaces come in contact under pressure and said thermoplastic material forms said first and second joints.

7. An apparatus according to claim 6, wherein said first and second bead control element may include:
a temperature resistant rigid shield, said shield being close fitting to said first and second sealing material at, and adjacent to the surfaces to be joined, said shield being adapted so that it maintains the close fitting relationship with said first and second sealing material at, and in the region of the joint during translation of said first and second members.

8. An apparatus according to claim 6, wherein said shield extends beyond said first and second members into said gap prior to translation.

9. An apparatus according to claim 8, wherein said shield is located moveably within the jig.

10. An apparatus according to any of claims 6 to 9, wherein the first and second bead control elements have a cylindrical or spherical surface for crimping the ends of the first and second sealing materials at the joint thereof.

11. A frame produced by the method of claim 1, including at least first and second elongate rigid members, a first flexible resilient sealing material located on said first member and a second flexible resilient sealing material located on said second member, said frame also having a first thermally formed joint between said first and second members and at least a second thermally formed joint between said first and second sealing materials, there being no substantial removal of any of the rigid material from said first or second profiles in the region of said second joint, wherein the sealing displacement of said sealing material at said second joint is at least 30%, preferably 50% or more of the sealing displacement of the sealing material at positions away from said second joint.

12. A frame according to claim 11, wherein said sealing material includes a plastic foam.

13. A frame according to claim 11 or 12, wherein said sealing material is "C" shaped in cross-section.

14. A frame according to claim 12 or 13, wherein said foam is an open cell foam.

## Patentansprüche

1. Verfahren zur Herstellung einer Verbindung zwischen einem ersten und einem zweiten starren Glied, von denen das erste Glied wenigstens ein erstes längliches flexibles Dichtungsmaterial aufweist und von denen das zweite Glied wenigstens ein zweites korrespondierendes längliches flexibles Dichtungsmaterial aufweist, mit den Schritten, dass:
1) das erste und das zweite Glied zur Verfügung gestellt werden, von denen jedes eine frei liegende Oberfläche aufweist, wobei die frei liegende Oberfläche des ersten Glieds einen Schnitt durch das erste Dichtungsmaterial umfasst und die frei liegende Oberfläche des zweiten Glieds einen Schnitt durch das zweite Dichtungsmaterial umfasst, ohne dass ein wesentlicher Teil weder von dem ersten noch von dem zweiten Glied im Bereich der Verbindung entfernt wird;
2) jedes Glied derart angeordnet wird, dass die frei liegende Oberfläche des ersten Glieds der frei liegenden Oberfläche des zweiten Glieds gegenüber liegt und von dieser getrennt ist;
3) die Temperatur von thermoplastischem Material, das die Verbindung zwischen den Gliedern bilden soll, derart erhöht wird, dass das thermoplastische Material in seine plastische Phase eintritt;
4) wenigstens das erste oder das zweite Glied derart verschoben wird, dass die frei liegenden Oberflächen in Kontakt gebracht werden und dass das thermoplastische Material die Verbindung zwischen dem ersten und dem zweiten Glied und die Verbindung zwischen dem ersten und dem zweiten Dichtungsmaterial bildet; und
5) während des Verschiebungsschritts der Schritt ausgeführt wird, dass die Raupenbildung für wenigstens die äußere Oberfläche des ersten und des zweiten Dichtungsmaterials gesteuert wird.

2. Verfahren nach Anspruch 1, **dadurch gekennzeichnet, dass** der Schritt 5) den Schritt umfasst, dass:
- die Raupenbildung des starren ersten und zweiten Glieds auf wenigstens einer Seite des ersten und des zweiten Dichtungsmaterials in der Nähe der Verbindungsstelle gesteuert wird.

3. Verfahren nach Anspruch 1 oder 2, **dadurch gekennzeichnet, dass** der Schritt 5) den Schritt umfasst, dass:
- ein im Wesentlichen eng passender, temperatur-stabiler Schild um die äußere Oberfläche des ersten und des zweiten Dichtungsmaterials bei und in der Nähe der Oberflächen gebildet wird, die verbunden werden sollen; und
- der Schild während des gesamten Verschiebungsschritts in eng passender Anordnung mit dem ersten und dem zweiten Dichtungsmaterial bei und in der Nähe der Oberflächen gehalten wird, die verbunden werden sollen.

4. Verfahren nach einem der vorhergehenden Ansprüche, **dadurch gekennzeichnet, dass** es den weitern Schritt aufweist, dass die Enden des ersten und des zweiten Dichtungsmaterials bei ihrer Verbindung zusammengedruckt werden.

5. Verfahren nach Anspruch 4 und nach Anspruch 3, **dadurch gekennzeichnet, dass** der Schild eine zylindrische oder sphärische Oberfläche an einer Endoberfläche des Schilds aufweist, die fern von dem ersten oder dem zweiten Glied liegt, und dass der Schritt des Zusammendruckens durch die zylindrische oder sphärische Oberfläche durchgeführt wird.

6. Vorrichtung zur Herstellung einer Verbindung zwischen einem ersten und einem zweiten starren Glied, von denen das erste Glied wenigstens ein erstes längliches flexibles Dichtungsmaterial aufweist und von denen das zweite Glied wenigstens ein zweites korrespondierendes längliches flexibles Dichtungsmaterial aufweist, wobei jedes Glied des Weiteren eine frei liegende Oberfläche aufweist, die das erste und das zweite Dichtungsmaterial schneidet, mit:
- einer Lehre, die dazu dient, das erste und das zweite Glied derart anzuordnen, dass die frei liegenden Oberflächen des ersten und des zweiten Glieds zueinander weisen und voneinander getrennt sind, so dass ein Spalt gebildet wird;
- einem ersten in der Lehre enthaltenen Raupensteuerungselement, das dazu dient, die Raupenbildung auf der äußeren Oberfläche des ersten und des zweiten Dichtungsmaterials zu steuern, und einem zweiten in der Lehre enthaltenen Raupensteuerungselement, das dazu dient, die Raupenbildung des ersten und des zweiten starren Glieds auf wenigstens einer Seite des ersten und des zweiten Dichtungsmaterials in der Nähe der Verbindungsstelle zu steuern;
- einer Heizung , die dazu dient, thermoplastisches Material derart aufzuwärmen, dass eine erste Verbindung zwischen dem ersten und dem zweiten Glied und eine zweite Verbindung zwischen dem ersten und dem zweiten Dichtungsmaterial gebildet wird; und
- einem Verschiebungsgerät, das dazu dient, wenigstens das erste oder das zweite Glied derart zu verschieben, dass die frei liegenden Oberflächen unter Druck in Kontakt geraten und dass das thermoplastische Material die erste und die zweite Verbindung bildet.

7. Vorrichtung nach Anspruch 6, **dadurch gekennzeichnet, dass** das erste und das zweite Raupensteuerungselement Folgendes umfassen können:
- einen temperatur-beständigen starren Schild, wobei der Schild eng passend zu dem ersten und dem zweiten Dichtungsmaterial bei und in der Nähe der zu Verbindenden ist, wobei der Schild derart ausgebildet ist, dass er während des Verschiebens des ersten und des zweiten Glieds das eng passende Verhältnis mit dem ersten und dem zweiten Dichtungsmaterial bei und in der Nähe des Bereichs der Verbindung aufrecht erhält.

8. Vorrichtung nach Anspruch 6, **dadurch gekennzeichnet, dass** sich der Schild vor der Verschiebung über das erste und das zweite Glied hinaus bis in den Spalt hinein erstreckt.

9. Vorrichtung nach Anspruch 8, **dadurch gekennzeichnet, dass** der Schild im Inneren der Lehre beweglich angeordnet ist.

10. Vorrichtung nach einem der Ansprüche 6 bis 9, **dadurch gekennzeichnet, dass** das erste und das zweite Raupensteuerungselement eine zylindrische oder sphärische Oberfläche aufweisen, die dazu dient, die Enden des ersten und des zweiten Dichtungsmaterials bei ihrer Verbindung zusammenzudrucken.

11. Rahmen, der durch das Verfahren nach Anspruch 1 hergestellt ist, mit wenigstens einem ersten und einem zweiten starren Glied, einem ersten länglichen flexiblen Dichtungsmaterial, das an dem ersten Glied angeordnet ist, einem zweiten länglichen flexiblen Dichtungsmaterial, das an dem zweiten Glied angeordnet ist, wobei der Rahmen des Weiteren eine erste thermisch gebildete Verbindung zwischen dem ersten und dem zweiten Glied und wenigstens eine zweite thermisch gebildete Verbindung zwischen dem ersten und dem zweiten Dichtungsmaterial aufweist, wobei es keine wesentliche Entfernung irgend welchem starren Material von dem ersten oder dem zweiten Profil im Bereich der zweiten Verbindung gibt, wobei die Dichtverschiebung des Dichtungsmaterials bei der zweiten Verbindung wenigstens 30%, bevorzugt 50% oder mehr der Dichtverschiebung des Dichtungsmaterials bei Stellen beträgt, die fern von der zweiten Verbindung liegen.

12. Rahmen nach Anspruch 11, **dadurch gekennzeichnet, dass** das Dichtungsmaterial einen Plastikschaum umfasst.

13. Rahmen nach Anspruch 11 oder 12, **dadurch gekennzeichnet, dass** das Dichtungsmaterial einen Querschnitt in Form eines "C" hat.

14. Rahmen nach Anspruch 12 oder 13, **dadurch gekennzeichnet, dass** der Schaum ein offenzelliger Schaum ist.

## Revendications

1. Un procédé de fabrication d'un joint entre des premier et second éléments rigides, ledit premier élément ayant au moins un premier matériau d'étanchéité souple allongé et ledit second élément ayant au moins un second matériau d'étanchéité allongé correspondant, comprenant les étapes consistant à :
1) prévoir lesdits premier et second éléments, chacun ayant une surface exposée, la surface exposée dudit premier élément incluant une section à travers ledit premier matériau d'étanchéité et la surface exposée dudit second élément incluant une section à travers ledit second matériau d'étanchéité sans enlever une partie importante de l'un ou l'autre des premier ou second éléments dans la zone du joint ;
2) placer chaque élément de sorte que la surface exposée du premier élément fait face à et est séparée de la surface exposée dudit second élément ;
3) élever la température du matériau thermoplastique qui doit former le joint entre les éléments de sorte que le matériau thermoplastique entre dans sa phase plastique ;
4) faire subir une translation à au moins un des premier et second éléments de sorte que les surfaces exposées sont amenées en contact et que le matériau thermoplastique forme le joint entre lesdits premier et second éléments et le joint entre lesdits premier et second matériaux d'étanchéité ; et
5) pendant ladite étape de translation : réaliser un contrôle de formation de bourrelet pour au moins la surface extérieure desdits premier et second matériaux d'étanchéité.

2. Un procédé selon la revendication 1, dans lequel l'étape 5) comprend :
le contrôle de la formation de bourrelet des premier et second éléments rigides sur au moins un côté des premier et second matériaux d'étanchéité adjacent à la position de joint.

3. Un procédé selon la revendication 1 ou 2, dans lequel l'étape 5) inclut :
la formation d'une protection stable en température à ajustement sensiblement serré autour de la surface extérieure desdits premier et second matériaux d'étanchéité au niveau des, et de façon adjacente aux surfaces à joindre ; et
le maintien de ladite protection dans un agencement à ajustement serré avec lesdits premier et second matériaux d'étanchéité au niveau des, et de façon adjacente aux surfaces étant joints tout au long de l'étape de translation.

4. Un procédé selon l'une quelconque des revendications précédentes, comprenant en outre l'étape de rabattre les extrémités des premier et second matériaux d'étanchéité au niveau du joint de ceux-ci.

5. Un procédé selon la revendication 4 lorsque dépendante de la revendication 3, dans lequel ladite protection a une surface cylindrique ou sphérique sur une surface d'extrémité de la protection éloignée dudit premier ou second élément et ladite étape de rabattage est effectuée par ladite surface cylindrique ou sphérique.

6. Un appareil pour fabriquer un joint entre des premier et second éléments rigides, ledit premier élément ayant au moins un premier matériau d'étanchéité souple allongé et ledit second élément ayant au moins un second matériau d'étanchéité souple allongé correspondant, chaque élément ayant également une surface exposée qui coupe lesdits premier et second matériaux d'étanchéité, comprenant :
un gabarit pour placer lesdits premier et second éléments de sorte que les surfaces exposées desdits premier et second éléments sont placées face à face et séparées l'une de l'autre formant ainsi un espacement ;
ledit gabarit incluant un premier élément de commande de bourrelet pour commander le bourrelet sur la surface extérieure des premier et second matériaux d'étanchéité et un second élément de commande de bourrelet pour commander le bourrelet des premier et second éléments rigides sur au moins un côté des premier et second matériaux d'étanchéité adjacent à la position de joint ;
un dispositif de chauffage pour chauffer le matériau thermoplastique pour former un premier joint entre lesdits premier et second éléments et un second joint entre lesdites premier et second matériaux d'étanchéité ; et
un dispositif de translation pour faire subir une translation à au moins l'un desdits premier et second éléments de sorte que les surfaces exposées viennent en contact sous pression et ledit matériau thermoplastique forme lesdits premier et second joints.

7. Un appareil selon la revendication 6, dans lequel lesdits premier et second éléments de commande de bourrelet peuvent comprendre :
une protection rigide résistant à la température, ladite protection étant ajustée de manière serrée avec lesdits premier et second matériaux d'étanchéité au niveau des, et de façon adjacente aux, surfaces à joindre, ladite protection étant conçue de sorte qu'elle maintient la relation d'ajustement serré avec lesdits premier et second matériaux d'étanchéité au niveau et dans la zone du joint pendant la translation desdits premier et second éléments.

8. Un appareil selon la revendication 6, dans lequel ladite protection s'étend au-delà desdits premier et second éléments dans ledit espacement avant la translation.

9. Un appareil selon la revendication 8, dans lequel ladite protection est placée de manière mobile dans le gabarit.

10. Un appareil selon l'une quelconque des revendications 6 à 9, dans lequel les premier et second éléments de commande de bourrelet ont une surface cylindrique ou sphérique pour rabattre les extrémités des premier et second matériaux d'étanchéité au niveau du joint de ceux-ci.

11. Un châssis produit par le procédé de la revendication 1, incluant au moins des premier et second éléments rigides allongés, un premier matériau d'étanchéité élastique souple placé sur ledit premier élément et un second matériau d'étanchéité élastique souple placé sur ledit second élément, ledit châssis ayant également un premier joint formé de façon thermique entre lesdits premier et second éléments et au moins un second joint formé de façon thermique entre lesdits premier et second matériaux d'étanchéité, aucun enlèvement important d'un quelconque matériau rigide à partir desdits premier ou second profilés dans la zone dudit second joint n'existant, dans lequel le déplacement d'étanchéité dudit matériau d'étanchéité au niveau dudit second joint est d'au moins 30 %, de préférence 50 % ou plus du déplacement d'étanchéité du matériau d'étanchéité à des positions éloignées dudit second joint.

12. Un châssis selon la revendication 11, dans lequel ledit matériau d'étanchéité comprend une mousse de plastique.

13. Un châssis selon la revendication 11 ou 12, dans lequel ledit matériau d'étanchéité a une section transversale en forme de "C".

14. Un châssis selon la revendication 12 ou 13, dans lequel ladite mousse est une mousse à alvéoles ouverts.
